Europäisches Patentamt

European Patent Office

Office européen des brevets

(11) Veröffentlichungsnummer: **0 232 542 B1**

# EUROPÄISCHE PATENTSCHRIFT

(45) Veröffentlichungstag der Patentschrift: **17.04.91**

(51) Int. Cl.⁵: **H02P 7/638**

(21) Anmeldenummer: **86118003.2**

(22) Anmeldetag: **23.12.86**

(54) **Elektronische Steuer- und Regeleinrichtung.**

(30) Priorität: **06.02.86 DE 3603572**

(43) Veröffentlichungstag der Anmeldung:
**19.08.87 Patentblatt 87/34**

(45) Bekanntmachung des Hinweises auf die
Patenterteilung:
**17.04.91 Patentblatt 91/16**

(84) Benannte Vertragsstaaten:
**DE FR GB IT**

(56) Entgegenhaltungen:
**DE-A- 2 325 256**
**DE-A- 2 650 423**
**DE-A- 2 856 379**

(73) Patentinhaber: **ROBERT BOSCH GMBH**
**Postfach 50**
**W-7000 Stuttgart 1(DE)**

(72) Erfinder: **Hornung, Friedrich, Dipl.-Ing.**
**Am Ochsenwald 10A**
**W-7000 Stuttgart 80(DE)**

**Beschreibung**

Stand der Technik

Die Erfindung geht aus von einer Steuer- und Regeleinrichtung nach der Gattung des Hauptanspruchs. Aus der DE-OS 23 25 256 ist bereits eine Steuer- und Regelungseinrichtung bekannt, die sowohl auf Änderungen der Eingangsspannung reagiert als auch bei Änderungen der Motorbelastung die effektive Motorspannung erhöht, so daß einem Drehzahlabfall entgegengearbeitet wird. Diese Schaltung hat sich als sehr betriebssicher erwiesen, jedoch tritt der Regelungseffekt in Abhängigkeit von der Motorbelastung in den Hintergrund bezüglich des Regelungseffektes, der durch eine Änderung der Eingangsspannung hervorgerufen wird. Insbesondere die Belastungsregelung erfüllt daher nicht alle Erwartungen, insbesondere im Bereich niedrigerer Drehzahlen.

Vorteile der Erfindung

Die erfindungsgemäße Steuer- und Regelungseinrichtung mit den kennzeichnenden Merkmalen des Hauptanspruchs hat demgegenüber den Vorteil, daß zur Regelung zusätzlich zur Ankerrestspannung die Phasenverschiebung zwischen dem Motorstrom und der Eingangsspannung herangezogen wird. Dies bewirkt, daß eine sehr zuverlässige Regelung mit einer hohen Regelungsdynamik gegeben ist, die auch bei niederen Motordrehzahlen sicher arbeitet.

Durch die in den Unteransprüchen aufgeführten Maßnahmen sind vorteilhafte Weiterbildungen und Verbesserungen der im Hauptanspruch angegebenen Steuer- und Regeleinrichtung möglich. Besonders vorteilhaft ist es hierbei, die Kette aus RC-Gliedern zu bilden. Hierdurch wird die erfindungsgemäße Einrichtung besonders preisgünstig, so daß sie auch in kleine Verbrauchsgüter, beispielsweise elektrische Werkzeuge oder Haushaltsmaschinen, einsetzbar ist. Die weiteren Unteransprüche zeigen Möglichkeiten auf, wie durch aufwendigere Sample- und Hold-Schaltungen bzw. aktiven elektrischen Laufzeitschaltungen ein optimales Ergebnis erzielbar ist. Zwar sind so ausgebildete Schaltungsanordnungen aufwendiger, jedoch lassen sich dadurch besondere Gegebenheiten des Motors auf einfache Art und Weise berücksichtigen und ausjustieren.

Zeichnung

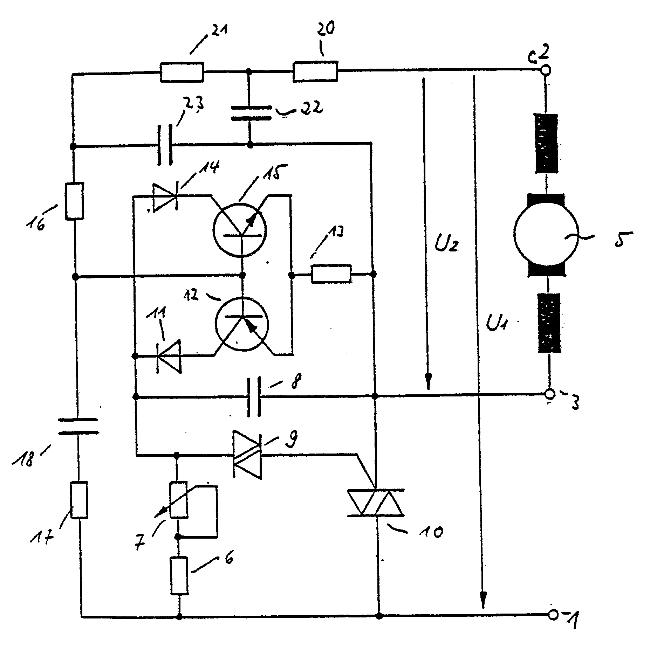

Ein Ausführungsbeispiel der Erfindung ist in der Zeichnung dargestellt und in der nachfolgenden Beschreibung näher erläutert.

Beschreibung des Ausführungsbeispiels

An den Klemmen 1 und 2 des Ausführungsbeispiels liegt die Netzwechselspannung U1 an. Die Netzwechselspannung gelangt über den Triac 10 zur Klemme 3. Zwischen den Klemmen 2 und 3, an denen der Universalmotor 5 angeschlossen ist, ist die Wechselspannung U2 abgreifbar, die von der Regelungsschaltung bestimmt wird. Der Triac 10 wird über eine an sich bekannte Triggerdiode 9 gezündet, die an seinem Steuergitter angeschlossen ist. Der Zündkreis weist eine Zündschaltung bestehend aus einer Reihenschaltung des Kondensators 8, dem einstellbaren Widerstand 7 und dem Widerstand 6 auf, die in ihrer Gesamtheit parallel zum Triac 10 geschaltet ist. Zwischen dem Kondensator 8 und dem Widerstand 7 ist die Triggerdiode 9 angeschlossen. An die Klemme 1 ist weiterhin ein Widerstand 17 angeschlossen, der mit einem Kondensator 18 in Reihe geschaltet ist. Der Kondensator 18 steht seinerseits mit den Basen zweier Transistoren 12 und 15 in Verbindung. Die Emitter der Transistoren 12 und 15 sind miteinander verbunden und über einen Widerstand 13 zur Klemme 3 geführt. An die Kollektoren der Transistoren 12 und 15 ist jeweils antiparallel eine Diode 14 bzw. 11 angeschlossen, die ihrerseits an den Abgriff zwischen dem Kondensator 8 und dem Widerstand 7 angeschlossen sind. Von der Klemme 2 ausgehend führt ein Widerstand 20 und ein Widerstand 21 sowie ein Widerstand 16 in Reihenschaltung ebenfalls zu den Basen der Transistoren 12 und 15. Zwischen dem Widerstand 20 und 21 ist ein Kondensator 22 und zwischen dem Widerstand 21 und 16 ein Kondensator 23 angeschlossen, deren weiterer Anschluß wiederum mit der Klemme 3 verbunden ist.

Die Wirkungsweise der Schaltungsanordnung soll nun im folgenden näher erläutert werden. Steigert man die Eingangsspannung U1 von 0 beginnend, dann folgt die Spannung U2 mit annähernd konstantem Spannungsabstand der Grenzlinie U2 = U1. Da die Schaltung transformatorlos und mit Phasenanschnitt arbeitet, kann die Spannung U2 die Spannung U1 nicht erreichen bzw. überschreiten. Erreicht die Spannung U1 einen bestimmten Wert, dann setzt der Regelvorgang ein. Dies äußert sich darin, daß eine weitere Steigerung von U1 keine weitere Zunahme von U2 zur Folge hat. Die Ausgangsspannung bleibt weitgehend konstant. Der Regeleffekt wird dadurch erreicht, daß der Stromflußwinkel des Triac 10 von einem Maximalwert kontinuierlich verkleinert wird, sobald die Spannung U1 einen vorgegebenen Wert überschreitet. Dies wird dadurch erreicht, daß der Zündkondensator 8 über die Widerstände 6 und 7 abwechselnd positiv und negativ geladen wird. Erreicht die Kondensatorspannung den Wert der Durchbruchsspannung der Triggerdioden 9, dann wird der Kondensator 8 über die Triggerdiode 9 und den Gatestromkreis des Triac 10 entladen, der Triac zündet. Mit dem jetzt beschriebenen Schaltungsteil ergibt sich ein Verbraucherstrom, dessen Stromflußwinkel von der Amplitude der Netzwechselspannung U1 praktisch unabhängig ist. Damit die effektive Verbraucherspannung konstant bleibt, ist jedoch eine Abnahme des Stromflußwinkels bei zunehmender Amplitude der Netzwechselspannung U1 und umgekehrt erforderlich. Die Einstellung des Stromflußwinkels wird dadurch erreicht, daß der Ladestrom des Kondensators 8 beeinflußt wird. Ein Teil des Ladestroms wird in Abhängigkeit von der Amplitude der Spannung U1 über die Dioden 11, 14, die Transistoren 12, 15 und den Widerstand 13 abgeleitet. Mit zunehmender Amplitude der Wechselspannung U1 wird somit die Ladegeschwindigkeit des Kondensators reduziert. Der Zündzeitpunkt wird zurückverlegt und damit der Zündwinkel verkleinert.

Der Abfluß des Teilladestroms erfolgt bei positivem Wert der Spannung U1 über den pnp-Transistor 12 und bei negativem Wert über den npn-Transistor 15 zur Klemme 3 hin. Die beiden Transistoren 12, 15 bilden ein komplementäres Transistorpaar im Parallel-Gegentaktbetrieb. Der Emitterwiderstand 13 erzeugt eine Gegenstromkopplung, mit der die Stromverstärkung der Transistoren auf das geeignete Maß herabgesetzt und linearisiert wird. Die Dioden 11 und 14 dienen zum Entkoppeln der Kollektoren der beiden Transistoren 12 und 15. Ohne diese Dioden würde der Strom nicht über die Kollektor-Emitter-Strecke des betreffenden gesteuerten Transistors, sondern über die Kollektor-Basis-Strecke des gegenüberliegenden Transistors unkontrolliert abfließen.

Damit die Spannung U2 konstant bleibt, muß der abfließende Teilladestrom im Zeitpunkt zwischen den Nulldurchgängen der Spannung U1 und dem Zündzeitpunkt des Triacs 10 so gesteuert werden, daß sich bei einer Änderung der Wechselspannung U1 am Anfang jeder Halbwelle eine größere Änderung des Stromflußwinkels und gegen Ende jeder Halbwelle eine kleine Änderung ergibt. Dies wird durch die Ansteuerung der Transistoren durch die Elemente 17 und 18 erreicht. Die Spannung U1 wird abgegriffen und diesem RC-Glied zugeführt. Der durch das RC-Glied fließende Strom weist gegenüber der Spannung U1 eine voreilende Phasenverschiebung auf und erzeugt an dem Widerstand 16 eine Spannung, die gegenüber der Spannung U1 ebenfalls um einen vorgegebenen Winkel voreilend ist. Die an dem Widerstand 16 anliegende Spannung, durch die das Transistorenpaar 12, 15 und damit der über die Transistoren 12, 15 fließende Teilladestrom gesteuert wird, weist aufgrund der Phasenverschiebung nach dem Nulldurchgang von U1 in jeder Halbwelle eine Maximum auf und klingt nach dem Maximum von U1 wieder bis 0 ab. Damit wird erreicht, daß eine Spannungskonstanz gegeben ist. Die Wirkungsweise dieser Schaltungsanordnung kann noch dadurch erhöht werden, wenn parallel zum Widerstand 7 und dem Kondensator 8 eine Stabilisierungsschaltung, beispielsweise mit Zenerdioden geschaltet ist.

Zur Ausregelung der Motorbelastung dient der zweite Steuerzweig mit den Widerständen 20 und 21 und 16, sowie den Kondensatoren 22 und 23. Bei dieser Schaltungsanordnung wird zur Regelung neben der Ankerrestspannung die Phasenverschiebung zwischen dem Motorstrom im Motor 5 und der Speisespannung U1 herangezogen. Diese Phasenverschiebung ist lastabhängig, wobei die Phasenverschiebung mit wachsendem Strom größer wird.

Der Strom ist gegenüber der Spannung U1 nacheilend. Aufgrund der Wirkungsweise des Triacs 10 wird der Motor 5 erst vom Netz getrennt, wenn der Strom seinen Nulldurchgang hat, während die voreilende Spannung U1 bereits betragsmäßig wieder ansteigt. Im Zeitraum zwischen dem Spannungsnulldurchgang und dem Stromnulldurchgang entsteht daher zwischen den Klemmen 2 und 3 ein Winkel und damit ein lastabhängiger Sinusspannungsrest, der in der Polarität mit der neu beginnenden Halbwelle identisch ist. Dieser Sinusrest ist der generatorischen Ankerrestspannung überlagert, tritt aber im Gegensatz zu dieser nur sehr kurzzeitig auf. Der Sinusrest ist als Signal für die Regelung gut geeignet, muß aber zeitlich gespeichert und verlängert werden, wenn er für die Regelung wirksam werden soll.

Dieser Sinusrest wird nun in die RC-Kette mit den Widerständen 20 und 21 und den Kondensatoren 22 und 23 eingespeist. Die RC-Kette bewirkt eine Speicherung und Glättung des Signals kombiniert mit einer Laufzeitverzögerung hin zu der Basis der Transistoren 12 und 15.

Um besonders wirksam in die Drehzahlregelung eingreifen zu können, muß der Ladevorgang des Kondensators 8 möglichst im gesamten Zeitraum zwischen dem Stromnulldurchgang dem darauf folgenden Zündzeitpunkt beeinflußt werden. Die Speicherung und Verzögerung des Sinusrestes ist daher so auszuwählen, daß diese Bedingung erfüllt ist. Dies ist insbesondere bei kleinen Motordrehzahlen kritisch, da hier der Zündzeitpunkt zeitlich sehr weit vom Stromnulldurchgang entfernt ist, so daß sich die Wahl der Verzögerung insbesondere daran orientieren muß, bei welchen unteren Motordrehzahlen noch eine gute Regelung angestrebt ist.

Während die Speicherung insbesondere durch den Kondensator 22 bewirkt wird, wird die Laufzeitverzögerung durch den Widerstand 21 und dem Kondensator 23 erreicht. Werden größere Laufzeitverzögerungen benötigt, so ist es möglich, weitere RC-Glieder anzuschließen, bis die notwendige Laufzeit erreicht ist. Grundsätzlich ist es jedoch auch möglich, andere Schaltungsanordnung für die Speicherung bzw. die Laufzeitverzögerung zu verwenden. Zur Speicherung eignen sich beispielsweise besonders Sample- und Hold-Schaltungen und für die Laufzeitverzögerung aktive Laufzeitschaltungen, z.B. Eimerkettenschaltungen, mit denen sehr große Laufzeiten auch bei Verwendung von kleinen Kondensatoren realisierbar sind.

Durch die Schaltungsanordnung wird erreicht, daß nicht nur eine Regelung bei einer Änderung der Eingangsspannung U1 erfolgt, sondern daß auch eine lastabhängige Regelung gegeben ist, wobei die lastabhängige Regelung im beschriebenen Ausführungsbeispiel dominant ist. Je nach Anwendungsgebiet ist es jedoch möglich, durch die Ausgestaltung der Signalstärke, die der Basis der Transistoren 12 und 15 zugeführt wird, zu erreichen, daß der Spannungsregelungs- bzw. der Momentregelungseffekt überwiegt.

## Ansprüche

1. Elektronische Steuer- und Regeleinrichtung für mit Wechselspannung betriebene Verbraucher (5), beispielsweise für einen Elektromotor, mit einer Triac-Phasenanschnittsteuerung, die einen über einen Ladewiderstand (6,7) aufladbaren Zündkondensator (8) und für jede Halbwelle einen proportionalen Verstärker (11-18) aufweist, wobei die Proportionalverstärker durch die Versorgungswechselspannung ($U_1$) sowie durch die am Motor abfallende Ankerrestspannung ($U_2$), die an einem Spannungsteiler (20-23) mit einem Speicherglied (22) abgreifbar ist, steuerbar sind und wobei durch die Proportionalverstärker ein Anteil des Ladestroms für den Zündkondensator abgreifbar ist, dadurch gekennzeichnet, daß parallel zum Speicherglied (22) des Spannungsteilers (20 - 23) mindestens ein Laufzeitverzögerungsglied (21, 23) geschaltet ist.

2. Elektronische Steuer- und Regeleinrichtung nach Anspruch 1, dadurch gekennzeichnet, daß der Spannungsteiler (20 - 23) zumindest teilweise aus RC-Gliedern (20, 22; 21, 23) besteht.

3. Elektronische Steuer- und Regeleinrichtung nach Anspruch 1 oder 2, dadurch gekennzeichnet, daß zur Speicherung eine Sample- und Hold-Schaltung dient.

4. Elektronische Steuer- und Regelschaltung nach einem der Ansprüche 1 bis 3, dadurch gekennzeichnet, daß das Laufzeitverzögerungsglied (21,23) durch eine aktive elektrische Laufzeitschaltung ausgebildet ist.

## Claims

1. Electronic open-loop and closed-loop control device for loads (5), operated with ac voltage, for example for an electric motor with a triac phase control which has a trigger capacitor (B) which can be charged via a charging resistor (6, 7) and a proportional amplifier (11 - 18) for each half wave, it being possible to control the proportional amplifiers by means of the ac supply voltage (U1) and by means of the residual armature voltage (U2) which drops at the motor and which can be tapped off at a voltage divider (20 - 23) with a storage element (22), and it being possible to tap off a portion of the charge current for the trigger capacitor by means of the proportional amplifiers, characterised in that at least one propagation time delay element (21, 23) is connected in parallel to the storage element (22) of the voltage divider (20 - 23).

2. Electronic open-loop and closed-loop control device according to Claim 1, characterised in that the voltage divider (20 - 23) consists at least partially of RC elements (20, 22; 21, 23).

3. Electronic open-loop and closed-loop control device according to Claim 1 or 2, characterised in that a sample and hold circuit serves for storage.

4. Electronic open-loop and closed-loop control circuit according to one of Claims 1 to 3, characterised in that the propagation time delay element (21, 23) is formed by means of an active electrical propagation time circuit.

## Revendications

1. Dispositif de régulation et de commande électronique pour un utilisateur (5) alimenté en tension alternative par exemple un moteur électrique avec une commande de découpage de phase par triac qui comporte un condensateur d'allumage (8) susceptible d'être chargé par l'intermédiaire d'une résistance (6, 7) et un amplificateur (11-18) proportionnel pour chaque demi-onde, l'amplificateur proportionnel étant attaqué par la tension d'alimentation alternative (U1) ainsi que par la tension résiduelle d'induit (U2) aux bornes du moteur, et qui se prend sur un diviseur de tension (20-23) comportant un élément de mémoire (22), de manière commandée et l'amplificateur proportionnel fournissant une partie de courant de charge du condensateur de déclenchement, dispositif caractérisé en ce qu'en parallèle à l'élément de mémoire (22) du diviseur de tension (20-23), on a au moins un élément de temporisation de temps de parcours (21, 23).

2. Dispositif de régulation et de commande électronique selon la revendication 1, caractérisé en ce que le diviseur de tension (20-23) est formé au moins partiellement d'éléments RC (20, 22 ; 21, 23).

3. Dispositif de régulation et de commande électronique selon la revendication 1 ou 2, caractérisé en ce que l'élément de mémoire est constitué par un circuit d'échantillonnage et de maintien.

4. Dispositif de régulation et de commande électronique selon l'une des revendications 1 à 3, caractérisé en ce que l'élément de temporisation de temps de parcours (21, 23) est formé par un circuit de temps de parcours électrique actif.